# FASCICULE DE BREVET EUROPEEN

(11) **EP 0 754 924 B1**
(45) Date de publication et mention de la délivrance du brevet: **07.03.2001**
(21) Numéro de dépôt: 96401609.1
(22) Date de dépôt: 18.07.1996
(51) Int. Cl.: F27B 7/20, C04B 7/43

(54) **Installation et procédé de calcination de matières minérales avec émission réduite d'oxydes d'azote**
Vorrichtung und Verfahren zum Kalzinieren von Rohmehl mit verminderter Stickoxydemission
Apparatus and process for the calcination of raw materials with reduced nitrogen oxide emission

(30) Priorité: 21.07.1995 FR 9508905
(43) Date de publication de la demande: 22.01.1997
(73) Titulaire: TECHNIP, 92400 Courbevoie (FR)
(72) Inventeur: Makris, Michel, 78400 Chatou (FR); Dupuis, Jacques, 69380 Chazay d'Azergues (FR); Sue, Jean-Luc, 42100 Saint Etienne (FR)
(74) Mandataire: Bentz, Jean-Paul

(56) Documents cités:
- EP-A- 0 313 871
- EP-A- 0 572 322
- US-A- 4 050 882
- ZEMENT, KALK, GIPS, vol. 32, no. 5, Mai 1979, WIESBADEN DE, pages 211-221, XP002002418 E. STEINBISS:
- ZEMENT, KALK, GIPS, vol. 41, no. 3, Mars 1988, WIESBADEN DE, pages 118-124, XP002002419 M. CHAMPONNOIS:
- ZEMENT, KALK, GIPS, vol. 36, no. 4, Avril 1983, WIESBADEN DE, pages 199-207, XP002002420 Y. UEDA ET AL:
- W.H. DUDA: "CEMENT DATA BOOK Vol. 1" 1985 , 3. ED., BAUVERLAG GMBH , WIESBADEN DE XP002002421 * page 473 - page 519 *

## Description

La présente invention a pour objet une installation de calcination de matières minérales quelconques, telles que, par exemple, matières premières de fabrication de ciment, chaux, alumine, magnésie ou dolomie, comportant au moins un étage de précalcination intercalé entre au moins un étage antérieur de préchauffage et au moins un étage ultérieur de calcination ou cuisson.

Elle vise également un procédé de calcination de telles matières comportant une étape de précalcination intercalée entre au moins une étape antérieure de préchauffage et au moins une étape ultérieure de calcination ou cuisson.

On a déjà proposé des installations de précalcination de matières minérales comprenant notamment un précalcinateur essentiellement constitué d'une chambre de combustion alimentée en air chaud, en combustible et en matière minérale, d'une chambre de réaction communiquant avec la chambre de combustion et alimentée d'une part en effluent de la chambre de combustion et d'autre part en fumées contenant des oxydes d'azote provenant d'un four de calcination ou cuisson, ces deux termes étant considérés ici comme équivalents, et d'un cyclone qui reçoit l'effluent de la chambre de réaction et sépare celui-ci en matière minérale qui est envoyée au four de calcination, et en gaz effluent, qui est envoyé à au moins un étage de préchauffage.

L'effluent de la chambre de réaction est constitué d'une suspension de matières minérales pulvérulentes dans des fumées de combustion du combustible et de décomposition de la matière minérale, provenant de la chambre de combustion du précalcinateur et du four de calcination.

Le document FR-A-2691790 décrit une installation et un procédé de ce type permettant une réduction d'environ 30 à 70% des oxydes d'azote générés par le four de calcination. Cette installation est du type comprenant un précalcinateur essentiellement constitué d'une chambre de combustion alimentée en air chaud, en combustible et en matière minérale, d'une chambre de réaction communiquant avec la chambre de combustion et alimentée en l'effluent de la chambre de combustion et en fumées riches en oxydes d'azote provenant d'un four de calcination, et d'un cyclone de séparation de la matière minérale d'avec les gaz effluents, ledit cyclone étant relié à la chambre de réaction par une conduite ou analogue ; cette installation est caractérisée en ce que l'alimentation en air chaud de la chambre de combustion s'effectue par au moins un premier conduit débouchant dans ladite chambre, au moins un deuxième conduit raccordé à au moins un brûleur monté sur ladite chambre, tandis qu'au moins un troisième conduit d'air chaud débouche dans la conduite de raccordement de la chambre de réaction au cyclone. Dans cette installation, les fumées contenant des oxydes d'azote provenant du four de calcination ne traversant pas la chambre de combustion et ne pénètrent dans le précalcinateur qu'au niveau de la chambre de réaction.

Le document FR-A-2691790 précise également le pourcentage d'air qui passe dans chacun des trois conduits précités.

La présente invention concerne une installation et un procédé grâce auxquels le taux d'élimination des oxydes d'azote est encore accru par rapport à l'installation et au procédé du document FR-A-2691790, et qui permet l'utilisation de combustibles gazeux, liquides ou solides dont la composition chimique ou les caractéristiques de combustion sont de nature à générer des oxydes d'azote.

De plus, cette installation selon une forme préférée de l'invention permet également, grâce à sa disposition particulière, l'utilisation de combustibles de qualité médiocre et donc peu coûteux.

L'installation de calcination de matière minérale sous forme pulvérulente de l'invention est du type comprenant des moyens de préchauffage d'une matière minérale pulvérulente, des moyens de précalcination de la matière minérale préchauffée, raccordés aux moyens de préchauffage, et des moyens de calcination (ou cuisson) de la matière minérale précalcinée raccordés aux moyens de précalcination.

Dans cette installation les moyens de précalcination comprennent, essentiellement :
a) au moins une zone (ou chambre) de combustion comportant des moyens d'alimentation en air chaud, en une partie de la matière minérale préchauffée provenant des moyens de préchauffage et en combustible,
b) au moins une zone (ou chambre) de réaction communiquant avec la zone de combustion et comportant des moyens d'alimentation en fumées de combustion de combustible et de décomposition résiduelle de la matière minérale provenant des moyens de calcination (ou de cuisson),
c) au moins une zone (ou chambre) de postcombustion comportant des moyens d'alimentation en air chaud, et
d) au moins un cyclone dont l'entrée communique avec la zone de postcombustion et les sorties communiquent respectivement avec les moyens de préchauffage et avec les moyens de calcination.

L'installation est caractérisée en ce qu'elle comprend une zone de contact interposée entre la zone de réaction et la zone de postcombustion, ladite zone de contact comportant des moyens d'alimentation en matière minérale préchauffée provenant des moyens de préchauffage, sans être passée par la zone de combustion et la zone de réaction.

Le procédé selon l'invention de calcination de matières minérales comprend le passage de la matière minérale successivement dans une zone de préchauffage, une zone de précalcination et une zone de calcination, la zone de précalcination comprenant successivement une zone de combustion, une zone de réaction, une zone de contact, une zone de postcombustion et une zone de séparation entre la matière minérale et les gaz de combustion, l'alimentation en air sous-stoechiométrique de la zone de combustion, l'alimentation en air de la zone de postcombustion, l'alimentation séparée en matière minérale préchauffée de la zone de combustion et de la zone de contact à partir de la zone de préchauffage, l'alimentation de la zone de réaction en fumées contenant des oxydes d'azote et provenant de la zone de calcination, la mise en circulation de l'effluent de la zone de combustion à travers, sucessivement, la zone de réaction, la zone de contact, la zone de postcombustion et la zone de séparation, l'envoi des gaz de combustion, séparés dans la zone de séparation, vers la zone de préchauffage et l'envoi de la matière minérale, séparée dans la zone de séparation, vers la zone de combustion par rapport à la quantité totale de matière minérale alimentant la zone de calcination, la proportion de matière minérale alimentant la zone de précalcination étant contrôlée pour avoir une température d'effluent de la zone de combustion comprise entre 950 et 1200°C et de préférence entre 1000 et 1100°C à l'entrée de la zone de réaction.

La combinaison d'une combustion sous-stoechiométrique et d'une température élevée en sortie de zone de combustion créent des conditions particulièrement favorables à la réduction des oxydes d'azote.

Il est clair que la proportion de matière minérale ainsi définie dépend dans chaque cas particulier d'un certain nombres de facteurs tels que la nature du combustible, sa quantité, son pouvoir combustible, et l'énergie thermique fournie par la combustion, etc.. Elle pourra être déterminée par des considérations théoriques et/ou par une expérimentation simple. Elle représentera en général de 50 à 90% de la quantité totale de matière minérale, le complément étant envoyé à la zone de contact.

Les caractéristiques et avantages de l'invention apparaîtront mieux dans la description détaillée qui suit et se réfère aux dessins annexés donnés uniquement à titre d'exemple, et dans lesquels.

La figure 1 est un schéma d'une installation de cuisson de matières minérales dans laquelle est incorporé un précalcinateur selon cette invention.

La figure 2 est une vue détaillée, mais schématique, de ce précalcinateur.

La figure 3 représente une variante d'exécution des zones de réaction et de contact du précalcinateur.

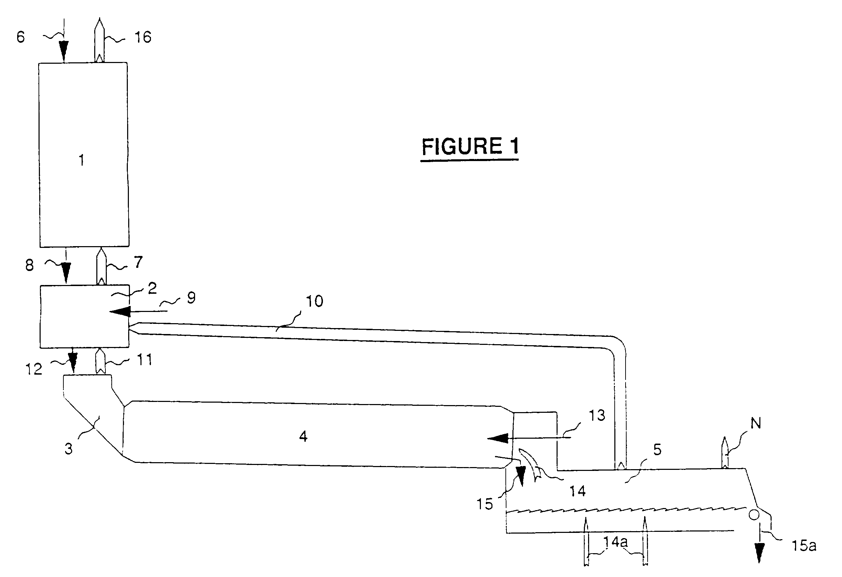

En se reportant à la figure 1, on voit une installation de cuisson de matières minérales dans laquelle la matière alimentée à l'état pulvérisé traverse successivement un préchauffeur 1, un précalcinateur 2, un four de calcination ou de cuisson 4, par exemple du type four rotatif, et un refroidisseur 5.

La matière pulvérisée est alimentée en 6 au préchauffeur 1 dans lequel les fumées chaudes 7 issues du précalcinateur 2 préchauffent ladite matière puis sont évacuées 16 à l'aide d'un ventilateur non représenté.

La matière chaude 8 sortant du préchauffeur 1 est essentiellement précalcinée dans le précalcinateur 2 par un apport d'énergie provenant d'une part de la combustion d'un combustible 9 avec de l'air préchauffée arrivant par une conduite 10 du refroidisseur 5 et d'autre part, des fumées 11 provenant du four 4, par exemple à travers une boîte de jonction 3.

La matière précalcinée 12 est alimentée au four 4 à travers la boîte de jonction 3 pour terminer la calcination ou la cuisson par un apport d'énergie provenant de la combustion d'un combustible 13 avec de l'air préchauffé 14 provenant du refroidisseur 5. Le produit calciné 15 (cuit, clinkérisé ou fondu selon le matériau) sortant du four 4, est refroidi dans le refroidisseur 5 au moyen d'un échange avec de l'air frais 14a introduit dans celui-ci, puis le produit est évacué en 15a.

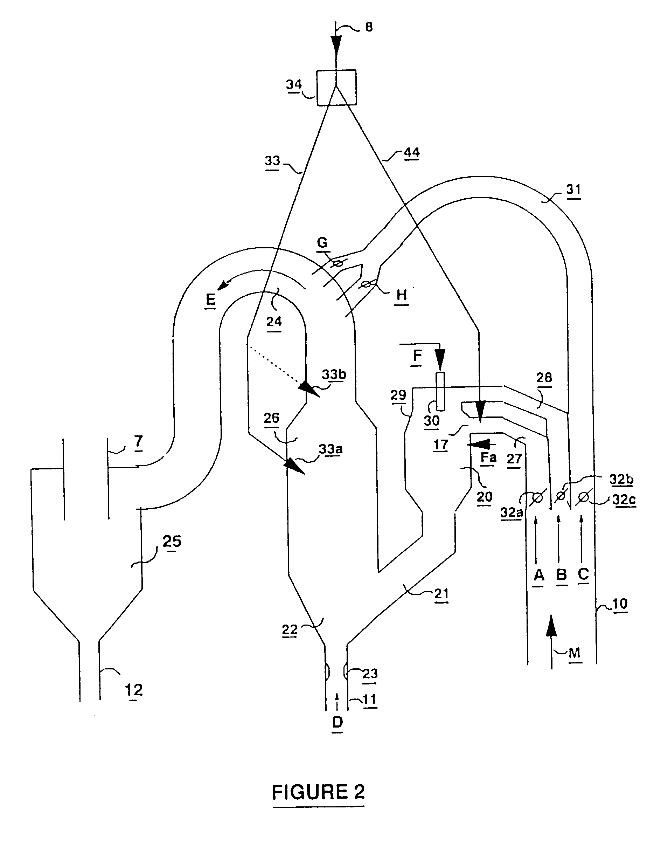

Au moins une partie de l'air chaud récupéré au refroidisseur 5, tel que celui passant dans la conduite 10, est utilisée comme air de combustion au précalcinateur 2, comme matérialisé par la flèche M sur la figure 2.

La flèche N sur la figure 1 illustre l'excédent éventuel d'air chaud sortant du refroidisseur 5 et destiné à d'autres usages.

Sur la figure 2, on voit que le précalcinateur proprement dit se compose d'une chambre (ou zone) de combustion 20 qui, selon l'invention, reçoit une partie seulement de la charge minérale préchauffée provenant du préchauffeur 1 par la conduite 8 qui se subdivise en deux branches 33 et 44. Seule la matière de la branche 44 parvient à la chambre de combustion, soit directement, soit de préférence par mise préalable en suspension en 17 dans un courant d'air chaud tel que celui du conduit 27. La chambre de combustion 20 est reliée, par exemple par une gaine 21, à la chambre de réaction 22, cette dernière étant reliée par l'intermédiaire du conduit 11 et d'une vanne ou d'un étranglement 23, à la boîte de jonction 3 d'où sortent les fumées (flèche D) pénètrant dans la chambre de réaction à sa partie inférieure. A sa partie supérieure, la chambre de réaction 22 communique avec une chambre ou zone de contact 26, laquelle reçoit en 33a une partie de la charge minérale à précalciner par la conduite 33 et communique par sa partie supérieure avec une conduite (ou zone) 24 de postcombustion, de préférence en forme de col de cygne, débouchant (flèche E) dans un cyclone 25 permettant la récupération du produit précalciné en 12, tandis que les fumées ou gaz de combustion sont envoyés par la conduite 7 à un ou plusieurs étages de préchauffage de la charge minérale.

Selon une forme de réalisation préférée, conforme à FR-A-2691790, l'air chaud M pénètre dans le précalcinateur 2 par une conduite 10 qui se subdivise en au moins trois conduits, à savoir un premier conduit 27 débouchant tangentiellement dans la chambre de combustion 20, un deuxième conduit 28 débouchant tangentiellement, par exemple à travers une volute 29, dans la partie supérieure de ladite chambre 20 au niveau d'un brûleur 30 équipant cette chambre, et un troisième conduit 31 débouchant en un ou plusieurs points dans la conduite ou chambre 24 de postcombustion et de raccordement de la chambre de contact 26 au cyclone 25.

On observera ici que le premier conduit 27 et le second conduit 28 impriment de préférence à l'air chaud un même sens de rotation dans la chambre de combustion 20.

Le brûleur 30 reçoit du combustible matérialisé par les flèches F et Fa, cette injection de combustible pouvant être réalisée au choix par l'un ou l'autre des emplacements ou bien par les deux.

Selon une variante moins préférée, utilisable pour des combustibles faciles à brûler, la chambre de combustion 20 est de construction plus simple et peut comporter seulement une arrivée d'air 27 ou 28, une arrivée de combustible F ou Fa, une arrivée de matière minérale 44 et une sortie 21.

Le flux d'air chaud sortant du troisième conduit 31 peut, comme illustré, être divisé en plusieurs courant contrôlés, par exemple par des vannes G et H.

On a montré un ensemble de vannes de réglage du débit d'air chaud parvenant d'une part, via le premier conduit 27 (vanne 32a), à la chambre de combustion 20 (flèche A), et d'autre part aux deuxième et troisième conduits 28 et 31 (flèches B et C respectivement) avec les vannes 32b et 32c respectivement.

On observera que les gaz ou fumées de combustion du four 4 ne traversent pas la chambre de combustion 20.

La zone de contact 26 reçoit l'effluent de la chambre de réaction 22, constitué de la matière minérale alimentée par 44 partiellement décarbonatée, et en suspension dans les fumées de combustion provenant de la chambre de combustion 20 via le conduit 21 et du four de calcination 4 via le conduit 11, et une seconde partie de la matière minérale à précalciner alimentée par le conduit 33.

Cette zone de contact est de préférence munie de dispositifs du type distributeur de matière (chicanes ou cuillères), qui répartissent la matière à la chute et permettent d'assurer la reprise et la mise en suspension de la matière minérale introduite dans cette zone par l'effluent de la zone de réaction, et d'éviter une chute directe vers la zone de réaction 22 ce qui entraînerait un refroidissement et des perturbations de cette zone 22.

Dans cette zone de contact 26 s'effectuent un échange thermique et un brassage entre la matière minérale alimentée par le conduit 33 et l'effluent de la chambre de réaction 22.

On a représenté les chambres 22 et 26 sous forme d'un espace continu. Il est entendu que ces espaces peuvent être séparés, par exemple par une conduite de jonction ou de liaison.

Dans ce cas, la reprise de la seconde partie de la matière minérale à précalciner en provenance du conduit 33 est favorisée par l'augmentation de vitesse et l'effet de jet de la suspension provenant de la chambre de combustion.

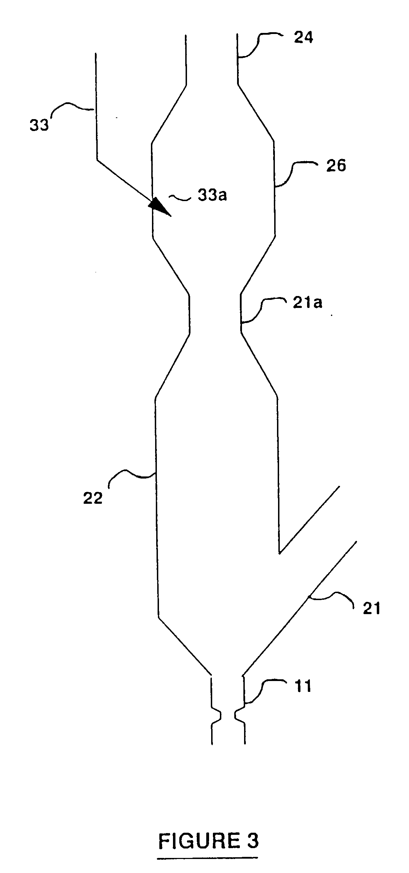

La figure 3 illustre une telle variante. On retrouve les chambres 22 et 26, mais elles sont séparées et reliées par une conduite de liaison 21a.

Selon une autre modalité d'exécution, la chambre ou zone 26 est constituée par un simple conduit reliant la zone de réaction 22 à la zone de postcombustion (cette dernière étant constituée par la partie de la conduite 24 en forme de col de cygne). La partie amont de la conduite 24 peut être utilisée à cet effet, la matière minérale arrivant dans ce cas au point 33b et non plus au point 33a. L'augmentation de la vitesse de la suspension à l'entrée de la conduite 24 permet alors une reprise plus efficace de la matière minérale alimentée en 33b. Dans ce cas, la zone de plus grand diamètre en amont de la conduite 24 serait uniquement la zone de réaction.

De manière générale, il doit être entendu que les expressions "chambre", "zone" ou "conduite" n'ont pas de signification distincte et désignent seulement des espaces où se produisent un ou plusieurs phénomènes physiques et/ou chimiques et dont la taille et la forme sont adaptées pour assurer un temps de séjour suffisant et permettre un déroulement correct du (desdits) phénomène(s), et pour assurer un contact intime entre les gaz en présence et la matière par le moyen de turbulences favorisant les mélanges et les échanges thermiques.

L'emploi de l'une ou l'autre de ces expressions n'a d'autre but que de faciliter la compréhension du présent exposé.

Le préchauffeur 1 peut comporter des conduites de mise en contact de la matière minérale pulvérulente 6 avec les gaz de combustion chauds provenant du précalcinateur 2 et éventuellement du four de cuisson 4 par une conduite telle que 7, chaque conduite de mise en contact aboutissant à un cyclone séparateur ou analogue, permettant la descente progressive de la charge minérale et la remontée progressive des gaz de combustion.

De telles installations sont bien connues des spécialistes et ne seront pas décrites en détail (voir par exemple W.H. DUDA, Cement data book, Bauverlag Wiesbaden und Berlin, 3^{ème} édition pp 473 à 516).

Dans certains cas, une partie du gaz de combustion du four 4 peut être dirigée directement de celui-ci au préchauffeur (by-pass) sans traverser le précalcinateur, ce qui ne permet cependant pas de bénéficier des pleins avantages de l'invention en ce qui concerne la réduction de la teneur des fumées en oxydes d'azote.

Certains préchauffeurs sont du type à double alimentation avec des circuits de réchauffage séparés pour des portions distinctes de la charge minérale initiale.

Dans ce cas, un séparateur tel que 34 n'est pas nécessaire, ou tout au moins est placé en amont du préchauffeur, l'une des portions réchauffées de la matière minérale pouvant parvenir directement à la chambre de combustion 20 et l'autre portion réchauffée pouvant parvenir directement à la chambre de contact 26.

Le refroidisseur 5 peut être de type classique, tel que décrit par exemple par W.H. DUDA, Cement data book, Bauverlag Wiesbaden und Berlin 3ème édition pp 517 à 552 et ne sera donc pas autrement décrit.

Il est essentiel selon le procédé de l'invention, d'une part, que des conditions de combustion sous-stoechiométriques soient réalisées dans la chambre de combustion 20, et d'autre part, que la proportion de matière minérale admise dans la chambre de combustion 20 soit contrôlée pour que la température de l'effluent de cette chambre soit à une température de 950 à 1200°C, de préférence de 1000 à 1100°C, lorsqu'il pénètre dans la chambre de réaction 22, ceci afin de réduire le plus possible la teneur en oxydes d'azote, à la fois des gaz provenant de la chambre de combustion 20 et des fumées provenant du four 4. Il est également essentiel que les gaz ou fumées de combustion du four 4 ne traversent pas la chambre de combustion 20 et ne soient admis au précalcinateur que dans la chambre de réaction 22.

Une autre caractéristique préférée de l'invention tient dans le fait qu'on alimente la chambre de combustion avec une quantité d'air de combustion en défaut par rapport à la quantité normalement nécessaire pour brûler la totalité du combustible admis dans la chambre de combustion, c'est-à-dire pour oxyder complètement en CO₂ et H₂O les principaux constituants carbonés et hydrogénés présents dans le combustible (quantité sous-stoechiométrique d'oxygène). La quantité complémentaire d'air permettant une combustion plus poussée des matières combustibles est admise directement dans la zone de postcombustion.

L'atmosphère créée dans la chambre de combustion et qui est envoyée à la chambre de réaction peut donc être qualifiée de "réductrice" car elle contient des composés chimiques tels que C, CO et radicaux hydrocarbonés qui peuvent s'oxyder en permettant d'obtenir deux effets principaux :
* réaliser une combustion à faible taux d'oxyde d'azote dans la chambre de combustion 20, grâce à une combustion sous-stoechiométrique,
* détruire par réaction chimique les oxydes d'azote venant du four de calcination ou de cuisson par 11, cette destruction ayant lieu dans la chambre de réaction 22.

Les connections des conduits 27 et 28 sur la chambre 20 sont de préférence réalisées tangentiellement au corps cylindrique de cette chambre pour donner un mouvement de rotation au gaz afin de favoriser les turbulences et la centrifugation de la matière sur les parois. On obtient de ce fait un bon mélange thermique entre les gaz, la matière minérale et le combustible ainsi qu'une protection thermique des parois par effet de nappage de la matière sur les parois.

On indique ci-après des modalités préférées de mise en oeuvre de l'invention :
* la vitesse d'injection des fumées riches en oxydes d'azote 11 dans la chambre de réaction est avantageusement comprise entre 20 et 40 m/s, la vitesse moyenne des fumées dans la chambre de réaction est comprise entre 5 et 20 m/s, de préférence 10 à 15 m/s, et la vitesse moyenne des fumées dans la conduite précitée 24 en aval de l'injection du troisième flux d'air est comprise entre 8 et 24 m/s, de préférence 12 à 18 m/s.
* On précisera encore ici que, dans le mode d'exécution de la figure 2, la vitesse axiale d'injection du combustible pulvérisé dans la chambre de combustion est avantageusement comprise entre 10 et 30 m/s, et de préférence entre 10 et 18 m/s, tandis que l'air sous pression fourni par le brûleur est injecté dans ladite chambre à une vitesse supérieure à 75 m/s, et de préférence supérieure à 150 m/s.

L'air chaud est utilement subdivisé en un premier flux 27 injecté tangentiellement dans la chambre de combustion et représentant de 40 à 85% du flux d'air chaud total, en un deuxième flux 28 injecté au niveau de l'alimentation en combustible dans la chambre de combustion et représentant de 5 à 30% du flux d'air chaud total et en un troisième flux 31 injecté dans la conduite de raccordement de la zone de contact au cyclone et représentant de 10 à 50% du flux principal.

On précise ici, que la disposition du deuxième flux 28 permet d'obtenir une première zone de combustion avec uniquement du combustible et de l'air, en l'absence de matière minérale à précalciner. Cette disposition favorise le début de combustion des combustibles difficiles à brûler.

De préférence, le premier flux représente de 50 à 75% du flux d'air chaud total, le deuxième flux de 15 à 30%, et le troisième flux de 15 à 30%.

On a donc réalisé suivant l'invention une installation et un procédé de précalcination procurant des avantages exceptionnels notamment au regard de la réduction des émissions d'oxydes d'azote qui sont néfastes pour l'environnement.

Bien entendu, l'invention n'est nullement limitée au mode de réalisation décrit et illustré qui n'a été donné qu'à titre d'exemple.

## Revendications

1. Installation de calcination de matière minérale sous forme pulvérulente du type comprenant des moyens de préchauffage (1) d'une matière minérale pulvérulente, des moyens de précalcination (2) de la marière minérale préchauffée, raccordés aux moyens de préchauffage (1), et des moyens de calcination (4) de la matière minérale précalcinée raccordés aux moyens de précalcination, installation dans laquelle les moyens de précalcination (2) comprennent essentiellement :
a. au moins une zone de combustion (20) comportant des moyens d'alimentation en air chaud, en une partie de la matière minérale préchauffée provenant des moyens de préchauffage (1), et en combustible,
b. au moins une zone de réaction (22) communiquant avec la zone de combustion (20) et comportant des moyens d'alimentation en fumées provenant des moyens de calcination (4),
c. au moins une zone de postcombustion (24) comportant des moyens d'alimentation en air chaud et
d. au moins un cyclone (25) dont l'entrée communique avec la zone de postcombustion (24) et les sorties communiquent respectivement avec les moyens de préchauffage (1) et avec les moyens de calcination (4), ladite installation étant caractérisée en ce qu'elle comprend une zone de contact (26) interposée entre la zone de réaction (22) et la zone de postcombustion (24), ladite zone de contact (26) comportant des moyens d'alimentation en une autre partie de la matière minérale préchauffée provenant des moyens de préchauffage (1), sans être passée par la zone de combustion et la zone de réaction.

2. Installation selon la revendication 1, caractérisé en ce que la zone de combustion (20) comporte un brûleur (30) et en ce que les moyens d'alimentation en air chaud de la zone de combustion (20) comprennent au moins un premier conduit (27) débouchant tangentiellement dans la zone de combustion (20) et au moins un second conduit (28) débouchant tangentiellement dans la zone de combustion (20) au niveau d'un brûleur (30), de manière à imprimer un même sens de rotation à l'air chaud provenant des conduits (27 et 28) dans la zone de combustion (20).

3. Installation selon la revendication 2, dans laquelle les moyens d'alimentation de la zone combustion en une partie de la matière minérale préchauffée sont raccordés uniquement au premier conduit (27), le brûleur recevant seulement de l'air chaud par le second conduit (28).

4. Installation selon l'une quelconque des revendications 1 à 3, dans laquelle la zone de contact est équipée de dispositifs répartiteurs de matière permettant d'assurer la reprise et la mise en suspension de la matière minérale dans l'effluent de la zone de réaction.

5. Procédé de calcination de matières minérales avec émission réduite d'oxydes d'azote caractérisé en ce qu'on fait passer une matière minérale successivement dans une zone de préchauffage (1), une zone de précalcination (2) et une zone de calcination (4), la zone de précalcination comprenant successivement une zone de combustion (20), une zone de réaction (22), une zone de contact (26), une zone de post-combustion (24) et une zone de séparation (25) entre la matière minérale (12) et les gaz de combustion (7), on alimente en air sous-stoechiométrique (27 et/ou 28) la zone de combustion, on alimente en air (31) la zone de postcombustion, on alimente séparément en matière minérale la zone de combustion (44) et la zone de contact (33) à partir de la zone de préchauffage, on alimente la zone de réaction (22) en fumées (11) de la zone de calcination, on fait circuler l'effluent de la zone de combustion successivement à travers la zone de réaction (22), la zone de contact (26), la zone de postcombustion (24) et la zone de séparation (25), on envoie les gaz de combustion (7) séparés de la zone de séparation à la zone de préchauffage (1), on envoie la matière minérale (12) séparée de la zone de séparation à la zone de calcination (4), et on contrôle la proportion de matière minérale (44) alimentant la zone de combustion par rapport à la quantité totale de matière minérale alimentant la zone de précalcination (8) pour avoir une température d'effluent de la zone de combustion comprise entre 950 et 1200°C à l'entrée de la zone de réaction.

6. Procédé selon la revendication 5, dans lequel la température d'effluent de la zone de combustion est de 1000 à 1100°C à l'entrée de la zone de réaction.

## Patentansprüche

1. Vorrichtung zum Kalzinieren von Rohmehl in Pulverform der Art, umfassend Vorheizmittel (1) eines pulverförmigen Rohmehls, Mittel zum Vorkalzinieren (2) des vorgeheizten Rohmehls, die an die Vorheizmittel (1) angeschlossen sind, und Mittel zum Kalzinieren (4) des vorkalzinierten Rohmehls, die an die Mittel zum Vorkalzinieren angeschlossen sind, eine Vorrichtung, in der die Mittel zum Vorkalzinieren (2) im wesentlichen umfassen:
a. wenigstens eine Verbrennungszone (20, umfassend Mittel zur Heißluftversorgung in einem Teil des aus den Vorheizmitteln (1) stammenden vorgeheizten Rohmehls, und zur Brennmaterialversorgung,
b. wenigstens eine Reaktionszone (22), die mit der Verbrennungszone (20) in Verbindung steht und Mittel zur Versorgung mit aus den Mitteln zum Kalzinieren (4) stammenden Rauch umfaßt,
c. wenigstens eine Nachverbrennungszone (24), umfassend Mittel zur Heißluftversorgung und
d. wenigstens einen Zyklon (25), dessen Eingang mit der Nachverbrennungszone (24) in Verbindung steht und die Ausgänge jeweils mit den Vorheizmitteln (1) in Verbindung stehen und mit den Mitteln zum Kalzinieren (4), wobei besagte Vorrichtung dadurch gekennzeichnet ist, daß sie eine Kontaktzone (26) umfaßt, die zwischen der Reaktionszone (22) und der Nachverbrennungszone (24) zwischengeschoben ist, wobei besagte Kontaktzone (26) Mittel zur Versorgung in einem anderen Teil des vorgeheizten Rohmehls umfassen, das aus den Vorheizmitteln (1) stammt, ohne die Verbrennungszone und die Reaktionszone durchlaufen zu haben.

2. Vorrichtung gemäß Anspruch 1, dadurch gekennzeichnet, daß die Verbrennungszone (20) einen Brenner (30) umfaßt, und daß die Mittel zur Heißluftversorgung (20) wenigstens eine erste Leitung (27) umfassen, die tangential in die Verbrennungszone (20) einmündet und wenigstens eine zweite Leitung (28), die tangential in die Verbrennungszone (20) auf der Höhe eines Brenners (30) derart einmündet, daß sie eine selbe Rotationsrichtung der aus den Leitungen (27 und 28) stammenden Heißluft in der Verbrennungszone (20) beschreibt.

3. Vorrichtung gemäß Anspruch 2, in dem die Mittel zur Versorgung der Verbrennungszone in einem Teil des vorgeheizten Rohmehls ausschließlich an die erste Leitung (27) angeschlossen sind, wobei der Brenner Heißluft lediglich durch die zweite Leitung (28) erhält.

4. Vorrichtung gemäß Anspruch 1 bis 3, in dem die Kontaktzone mit Verteilervorrichtungen des Rohmehls ausgestattet ist, die die Wiederaufnahme und die Suspension des Rohmehls im Abgang der Reaktionszone erlaubt.

5. Verfahren zum Kalzinieren von Rohmehl mit verringerter Stickstoffemission, dadurch gekennzeichnet, daß man ein Rohmehl nacheinander in eine Vorheizzone (1), eine Zone zum Vorkalzinieren (2) und eine Zone zum Kalzinieren (4) einführt, wobei die Zone zum Vorkalzinieren nacheinander eine Verbrennungszone (20), eine Reaktionszone (22), eine Kontaktzone (26), eine Nachverbrennungszone (24) und eine Zone zum Trennen (25) des Rohmehls (12) vom Verbrennungsgas (7) umfaßt, man versorgt die Verbrennungszone mit unterstöchiometrischer Luft (27 und / oder 28), man versorgt die Nachverbrennungszone mit Luft (31), man versorgt die Verbrennungszone (44) und die Kontaktzone (33) von der Vorheizzone aus getrennt mit Rohmehl, man versorgt die Reaktionszone (22) mit Rauch (11) aus der Zone zum Kalzinieren, man läßt den Abgang der Verbrennungszone nach und nach durch die Reaktionszone (22), die Kontaktzone (26), die Nachverbrennungszone (24) und die Trennungszone (25) zirkulieren, man schickt die getrennten Verbrennungsgase (7) von der Trennungszone in die Vorheizzone (1), man schickt das getrennte Rohmehl (12) von der Trennungszone in die Zone zum Kalzinieren (4), und man kontrolliert den Anteil des Rohmehls (44), der die Verbrennungszone im Verhältnis zur Gesamtmenge des Rohmehls versorgt, das die Zone zum Vorkalzinieren (8) versorgt, um eine Abgangstemperatur der Verbrennungszone zwischen 950 und 1.200°C am Eingang der Reaktionszone zu haben.

6. Verfahren gemäß Anspruch 5, in dem die Abgangstemperatur der Verbrennungszone 1.000 bis 1.100°C am Eingang der Reaktionszone ist.

## Claims

1. Apparatus for the calcination of raw materials in pulverulent form of the type comprising pulverulent raw material pre-heating means (1), pre-heated raw material pre-calcinating means (2), connected to the pre-heating means (1), and pre-calcinated raw material calcinating means (4), connected to the pre-calcinating means, apparatus in which the pre-calcinating means (2) essentially comprise :
a. at least one combustion zone (20) comprising means for supplying it with hot air, with one part of the pre-heated raw material coming from the pre-heating means (1), and with fuel,
b. at least one reaction zone (22) that communicates with the combustion zone (20) and comprises means for supplying fumes coming from the calcinating means (4),
c. at least one post-combustion zone (24) that comprises hot air supplying means and
d. at least one cyclone (25) the input of which communicates with the post-combustion zone (24) and the outputs communicate with the pre-heating means (1) and with the calcinating means (4), respectively, said apparatus being characterized in that it comprises a contact zone (26) inserted between the reaction zone (22) and the post-combustion zone (24), said contact zone (26) comprising means for supplying an other part of the pre-heated raw material coming from the pre-heating means (1), without having passed through the combustion zone and the reaction zone.

2. Apparatus according to claim 1, characterized in that the combustion zone (20) comprises a burner (30) and in that the means for supplying the combustion zone (20) with hot air comprise at least one first duct (27) that opens tangentially in the combustion zone (20) and at least one second duct (28) that opens tangentially in the combustion zone (20) at the level of a burner (30), in order to communicate a same rotation direction to the hot air that comes from the ducts (27 and 28) into the combustion zone (20).

3. Apparatus according to claim 2, wherein the means for supplying the combustion zone with one part of the pre-heated raw material are only connected to the first duct (27), the burner receiving only hot air through the second duct (28) .

4. Apparatus according to any one of claims 1 to 3, wherein the contact zone is fitted with material distributing means enabling to ensure the recovery and suspension of the raw material in the effluent of the reaction zone.

5. Process for the calcination of raw materials with reduced nitrogen oxide emission characterized in passing a raw material successively in a pre-heating zone (1), a pre-calcinating zone (2) and a calcinating zone (4), the pre-calcinating zone successively comprising a combustion zone (20), a reaction zone (22), a contact zone (26), a post combustion zone (24) and a separating zone (25) between the raw material (12) and the flue gases (7), supplying the combustion zone with under-stoichiometric air (27 and/or 28), supplying the post-combustion zone with air (31), separately supplying the combustion zone (44) and the contact zone (33) with raw material from the pre-heated zone, supplying the reaction zone (22) with fumes (11) from the calcinating zone, circulating the effluent of the combustion zone successively through the reaction zone (22), the contact zone (26), the precombustion zone (24) and the separating zone (25), sending the separated flue gases (27) from the separating zone to the pre-heating zone (1), sending the separated raw material (12) from the separating zone to the calcinating zone (4), and controlling the proportion in raw material (44) supplying the combustion zone with respect to the total amount in raw material supplying the pre-calcinating zone (8) for having a temperature of effluent of the combustion zone comprised between 950 and 1200°C at input of the reaction zone.

6. Process according to claim 5, wherein the temperature of the effluent in the combustion zone is from 1000 to 1100°C at input of the reaction zone.
